# FASCICULE DE BREVET EUROPEEN

(11) **EP 2 199 636 B1**
(45) Date de publication et mention de la délivrance du brevet: **04.07.2012**
(21) Numéro de dépôt: 09014551.7
(22) Date de dépôt: 23.11.2009
(51) Int. Cl.: F16D 41/30, B60B 27/02, F16C 27/04

(54) **Moyeu roue-libre et roue de cycle équipée d'un tel moyeu**
Freilaufnabe und Rad eines Fahrrads mit derselben
Freewheel hub and bicycle wheel fitted with the same

(30) Priorité: 18.12.2008 FR 0807132
(43) Date de publication de la demande: 23.06.2010
(73) Titulaire: MAVIC S.A.S., 74370 Metz-Tessy (FR)
(72) Inventeur: Mercat, Jean-Pierre, 74650 Chavanod (FR); Neyroud, Christophe, 74960 Cran Gevrier (FR)

(56) Documents cités:
- FR-A- 2 734 617
- FR-A- 2 894 310

## Description

L'invention a trait à un moyeu roue-libre pour un cycle, tel qu'une bicyclette, ainsi qu'à une roue de cycle équipée d'un tel moyeu.

Il est connu d'équiper un cycle avec un moyeu roue-libre qui permet l'entraînement de cette roue au moyen d'une chaîne en prise sur une cassette de pignons, tout en permettant au cycle d'avancer, sur son élan, sans que l'utilisateur ait à pédaler en permanence.

FR-A-2 894 310 divulgue un moyeu roue-libre dans lequel un corps de moyeu supporte un corps de roue-libre, des cliquets étant intercalés entre le corps de moyeu et le corps de roue-libre pour solidariser en rotation ces deux organes lorsque le corps de roue-libre est entraîné par une cassette de pignons. Lorsque les cliquets sont en position rétractée, le corps de moyeu doit pouvoir tourner autour d'un arbre, alors que la corps de roue-libre demeure fixe autour de cet arbre. Pour ce faire, une bague de glissement montée sur une surface interne du corps de roue-libre est prévue pour venir en appui glissant sur une surface radiale externe du corps de moyeu. Le jeu de montage de la bague de glissement autour de la partie correspondante du corps de moyeu doit être défini précisément, au point que cette bague doit être alésée postérieurement à son montage dans le corps de roue-libre, ce qui est complexe et onéreux. Le Jeu entre la bague de glissement et la partie en regard du corps de moyeu tend à augmenter au cours de la durée de vie du moyeu roue-libre, ce qui diminue l'efficacité de la bague de glissement. En outre, les frottements résultant du glissement de la bague sur la partie en regard du corps de moyeu sont de nature à ralentir la roue dans son mouvement de rotation en phase de roue libre autour de l'axe défini par l'arbre central.

Il est par ailleurs connu de FR-A-2 734 617 d'équiper un arbre central d'un moyeu roue-libre de deux roulements à billes, supportant ensemble un corps de moyeu, et de deux autres roulements à billes, supportant ensemble un corps de roue-libre. Pour résister eux efforts importants qu'il subit, notamment de la part des roulements intermédiaires, l'arbre central de ce dispositif doit être particulièrement résistant. En pratique, il a un diamètre important, ce qui induit qu'il est lourd et d'un prix de revient peu attractif.

Il est également connu de FR-A-2- 678 991 de réaliser un moyeu roue-libre dont le corps de roue-libre est monté sur un palier à aiguilles pivotant sur un nez en acier traité à grande dureté. Ce type de palier peut travailler sous une charge importante. Un tel palier doit rouler sur une surface en acier très dure et usinée très précisément en rectification pour réduire son jeu radial. Cette conception impose donc de rapporter une pièce en acier traitée, lourde, précise et onéreuse, à l'antérieur du moyeu roue-libre.

C'est à ces inconvénients qu'entend plus particulièrement remédier l'invention en proposant un nouveau moyeu roue-libre léger, précis, économique et facile à produire, dans lequel une rotation aisée du corps de roue-libre peut être obtenue par rapport au corps de moyeu, tout en facilitant la transmission d'efforts entre ces corps lorsque le corps de roue-libre est menant par rapport au corps de moyeu.

A cet effet, l'invention concerne un moyeu roue-libre comprenant un arbre central définissant un axe de rotation, un corps de moyeu monté libre en rotation autour de l'arbre, un corps de roue-libre monté autour d'une partie du corps de moyeu avec possibilité de rotation unidirectionnelle et au moins un organe formant palier entre le corps de roue-libre et la partie du corps de moyeu autour de laquelle est monté le corps de roue-libre. Ce moyeu roue-libre est caractérisé en ce que des organes formant palier comprennent au moins une série de rouleaux disposés dans une gorge d'un premier élément, parmi le corps de roue-libre, et le corps de moyeu, cette gorge étant ménagée au voisinage d'une première surface du premier élément disposée en regard d'une deuxième surface du deuxième élément, parmi le corps de roue-libre et le corps de moyeu, alors que les rouleaux sont élastiquement déformables, dans les conditions normales d'utilisation du moyeu roue-libre, entre une première configuration où ils maintiennent les première et deuxième surfaces radialement écartées l'une de l'autre et où ils roulent sur le fond de la gorge et sur une portion du deuxième élément, et une deuxième configuration où ils permettent un appui des première et deuxième surfaces l'une contre l'autre.

Les rouleaux permettent de passer, grâce à leur déformation élastique, de la première configuration, où le moyeu peut tourner alors que le corps de roue-libre demeure fixe en rotation autour de l'arbre, à une deuxième configuration où les deux corps sont solidarisés en rotation.

Selon des aspects avantageux mais non obligatoires de l'invention, un tel moyeu peut incorporer une ou plusieurs des caractéristiques suivantes prises dans toute combinaison techniquement admissible :
- Les rouleaux sont enduits d'un fluide et retenus dans la gorge par la viscosité de ce fluide.
- En variante, les rouleaux sont maintenus en position dans la gorge par au moins une cage élastiquement déformable. Cette cage est avantageusement multipartite et apte à être insérée, par parties équipées de rouleaux, dans la gorge alors que les parties de la cage ce calent les unes les autres en place dans la gorge.
- Les rouleaux sont creux. Dans ce cas, la cage ou chaque partie de la cage peut comprendre deux flasques pourvus chacun d'organes en saillie aptes à coopérer chacun avec un organe en saillie de l'autre flasque pour être engagé dans un volume central d'un rouleau et former ensemble un arbre définissant un axe de rotation pour ce rouleau.

- Le moyeu roue-libre comprend une unique série de rouleaux déformables formant palier et disposés entre le corps de roue-libre et une partie du corps de moyeu alors que des paliers à corps roulants non déformables sont disposés respectivement entre le corps de roue-libre et l'arbre et entre l'arbre et la partie précitée du corps de moyeu.
- En variante, le moyeu roue-libre comprend deux séries de rouleaux déformables formant palier disposés entre le corps de roue-libre et la partie du corps de moyeu. Dans ce cas, une première série de rouleaux déformables est avantageusement disposée dans une première gorge ménagée dans la corps de roue-libre et destinée à rouler sur une surface du corps du moyeu, alors qu'une deuxième série de rouleaux déformables est disposée dans une deuxième gorge ménagée dans le corps de moyeu et destinée à rouler sur une surface du corps de roue-libre.
- Selon les modes de réalisation considérés, les rouleaux peuvent être en matériau synthétique, notamment en PEEK, en polyacétal ou en polyuréthane, ou en métal, notamment en aluminium, en magnésium ou en alliage à base de ces métaux.

L'invention concerne également une roue de cycle, notamment une roue de bicyclette, équipée d'un moyeu roue-libre tel que mentionné ci-dessus.

L'invention sera mieux comprise et d'autres avantages de celle-ci apparaîtront plus clairement à la lumière de la description qui va suivre de deux modes de réalisation d'un moyeu roue-libre conforme à son principe, donnée uniquement à titre d'exemple et faite en référence aux dessins annexés dans lesquels :

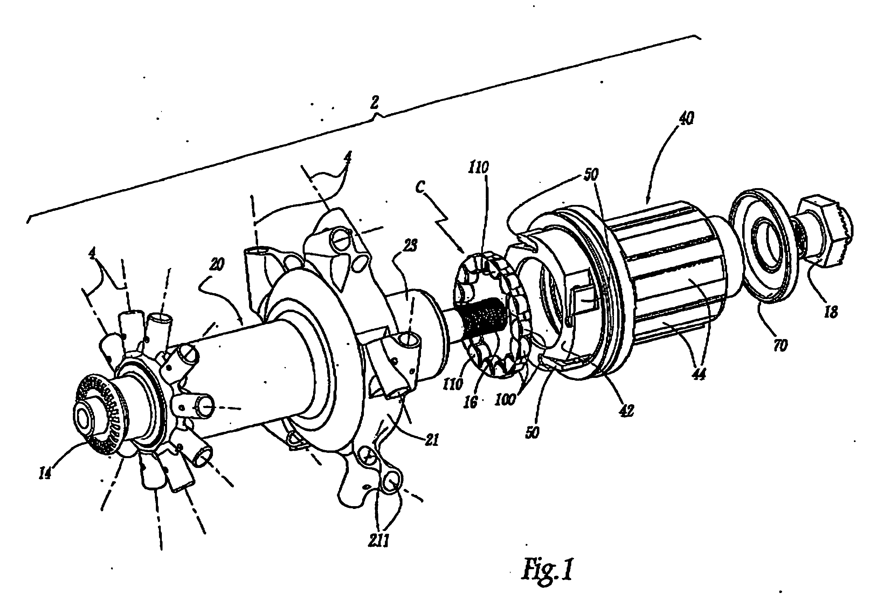

- la figure 1 est une vue en perspective éclatée d'un moyeu roue-libre conforme à l'invention appartenant à une roue arrière de bicyclette conforme à l'invention ;

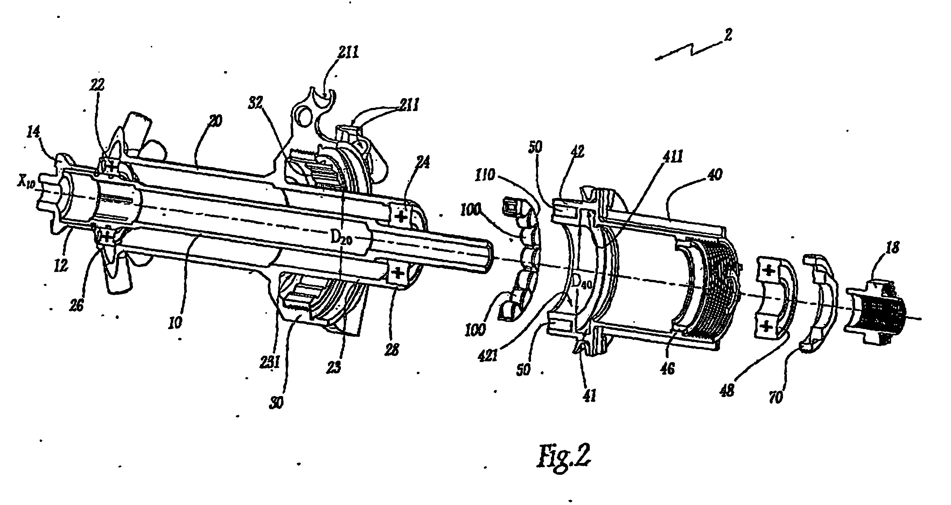

- la figure 2 est une vue en perspective éclatée, suivant un autre angle et en demi-coupe, du moyeu roue-libre de la figure 1 ;
- Ja figure 3 est une coupe longitudinale partielle du moyeu roue-libre des figures 1 et 2 ;
- la figure 4 est une coupe selon la ligne IV-IV à la figure 3 ;
- la figure 5 est une coupe selon la ligne V-V à la figure 3 ;
- la figure 6 est une vue à plus grande échelle du détail VI à la figure 5, lorsque le moyeu est en configuration de roue-libre;
- la figure 7 est une vue à plus grande échelle du détail VI à la figure 5, lorsque le moyeu est en configuration de pédalage ;
- la figure 8 est une vue du détail VIII à la figure 5 lorsque le moyeu est en configuration de pédalage ;
- la figure 9 est une vue en perspective éclatée d'une série de rouleaux déformables et des cages associées, utilisées dans le moyeu roue-libre des figures 1 à 8;
- la figure 10 est une vue de côté de la série de rouleaux et des cages de la figure 9 ;
- la figure 11 est une coupe selon la ligne XI-XI à la figure 9 ;
- la figure 12 est une vue à plus grande échelle du détail XII à la figue 11 ;
- la figure 13 est une vue à plus grande échelle du détail XIII à la figure 11 ; et
- la figure 14 est une coupe longitudinale en perspective d'un moyeu roue-libre conforme à un deuxième mode de réalisation de l'invention. Le moyeu roue-libre 2 représenté aux figures 1 à 13 fait partie d'une roue arrière de bicyclette dont les rayons 4 sont représentés par leurs traits d'axe à la figure 1 uniquement, ces rayons étant montés sur une jante non représentée.

Le moyeu 2 comprend un arbre creux 10 dont on note X₁₀ l'axe longitudinal, cet arbre 10 porte, au niveau d'une première extrémité filetée 12, un écrou 14. Au niveau de son extrémité filetée 16 opposée à l'extrémité 12, l'arbre 10 porte un second écrou 18. Les écrous 14 et 18 permettent le montage du moyeu 2 et de la roue à laquelle il appartient sur le cadre non représenté d'une bicyclette.

Dans ce qui suit, les termes « axial » et « radial » sont définis par rapport à l'axe X₁₀. Par exemple, une dimension axiale est mesurée parallèlement à l'axe X₁₀, alors qu'une dimension radiale est mesurée selon une direction radiale par rapport à cet axe.

Un corps de moyeu 20 est monté autour de l'arbre 10, avec possibilité de rotation, par rapport à l'arbre 10, autour de l'axe X₁₀. Deux paliers à billes 22 et 24 sont intercalés radialement entre l'arbre 10 et le corps 20. Ces paliers sont disposés au niveau des extrémités axiales 26 et 28 du corps 20. Il est à noter que l'écartement axial important entre les paliers 22 et 24 assure une très bonne rigidité et résistance au moyeu et à la roue.

Le corps 20 porte une bague 30 pourvue d'une denture interne 32 dont les dents sont inclinées. La bague 30 est vissée dans une portion annulaire 21 du corps 20 qui est pourvue de logements 211 de réception des extrémités collées de certains rayons 4.

Un corps de roue-libre 40 est disposé autour d'un embout cylindrique à section circulaire 23 formé par le corps 20 et qui s'étend entre la portion annulaire 21 et l'extrémité 28 de ce corps.

Le corps de roue-libre 40 forme un support 42 dans lequel sont disposés quatre cliquets 50 destinée à interagir avec la denture 32 pour solidariser sélectivement les corps 20 et 40 lorsque le moyeu 2 est en configuration dite de pédalage où le corps de roue-libre 40 est menant par rapport au corps de moyeu 20 car l'utilisateur exerce un effort d'entraînement en rotation du corps de roue-libre, au moyen d'une chaîne non représentée. Les cliquets 50 permettent donc une rotation unidirectionnelle du corps de moyeu 20 par rapport au corps de roue libre 40.

Le nombre de cliquets 50 peut être différent de quatre. Dans l'exemple des figures, ils travaillent ici deux par deux afin de réduire le pas d'encliquetage et sont chacun chargé par un ressort non-représenté.

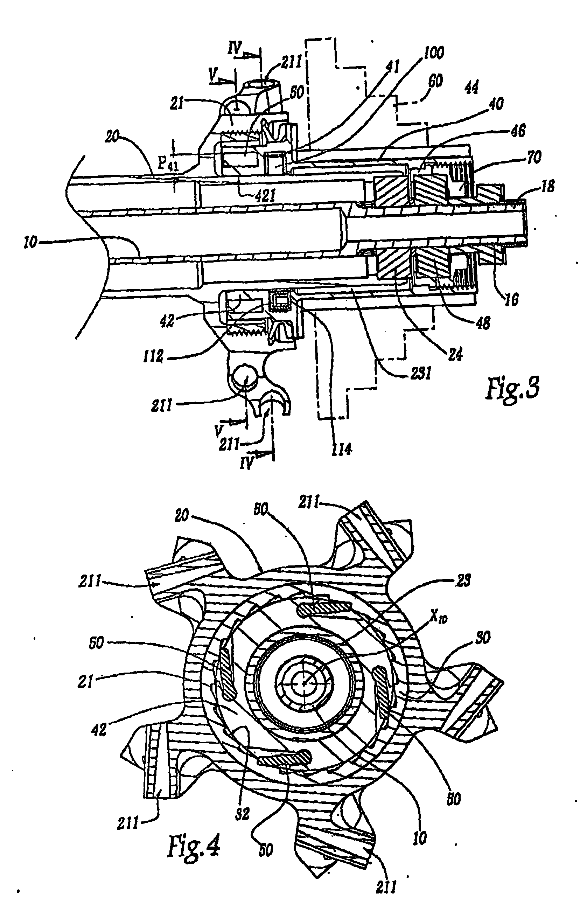

Le corps 40 est pourvu de nervures externes 44 formant des reliefs de solidarisation en rotation avec une cassette de pignons 60 représentée uniquement à la figure 3, en traits mixtes, par la trace de son enveloppe. Cette cassette de pignon est en prise avec la chaîne non représentée de la bicyclette.

Un anneau 46 disposé à l'intérieur du corps 40 forme un logement de réception d'un palier à billes 48 intercalé entre le corps 40 et l'arbre 10. Une rondelle filetée 70 est prévue pour obturer le corps 40, à l'opposé du support 42, en recevant en appui l'écrou 18 serré sur l'extrémité filetée 16 de l'arbre 10.

Le corps 40 est pourvu d'une gorge radiale interne 41 dans laquelle sont reçus quinze rouleaux 100 en PEEK (poly-éther-éther-cétone) maintenus en position dans la gorge 41 au moyen de trois cages 110 portant chacune cinq rouleaux 100.

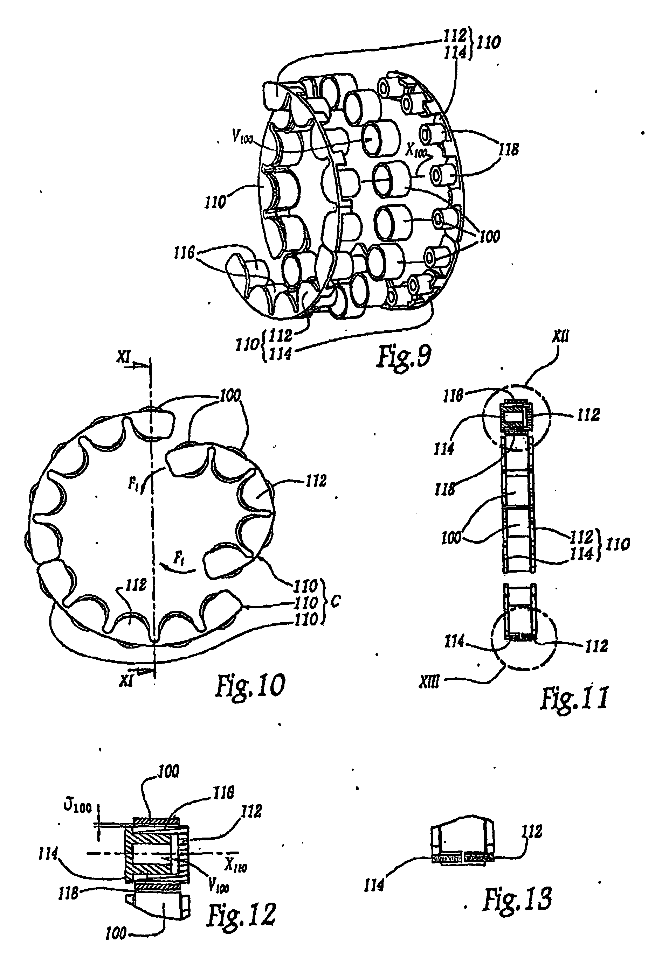

Comme il ressort plus particulièrement des figures 9 à 13, chaque rouleau 100 est cylindrique, à section circulaire, centrée sur un axe X₁₀₀ et creux, de sorte qu'il définit un volume intérieur V₁₀₀ de forme cylindrique à section circulaire. Son diamètre extérieur nominal D₁₀₀, sans contrainte, a une valeur de 4,9 mm environ, alors que son épaisseur radiale est d'environ 0,65 mm et sa longueur axiale, parallèle à l'axe X₁₀₀, d'environ 3 mm.

Compte tenu de son matériau constitutif et de ses dimensions, chaque rouleau 100 est élastiquement déformable dans les conditions normales de température pour l'utilisation du moyeu 2, c'est-à-dire pour des températures comprises entre -40 et +60°.

Chaque cage 110 est formée de deux flasques 112 et 114 qui sont disposés de part et d'autre de cinq rouleaux 100. Chaque flasque 112 est pourvu de cinq projections 116 en forme de manchon creux, alors que chaque flasque 114 est pourvu de cinq autres projections 118 également en forme de manchon creux. Chaque manchon 118 peut pénétrer à l'intérieur d'un manchon 116, l'ensemble des deux manchons engagés l'un dans l'autre étant reçu dans le volume intérieur V₁₀₀ d'un rouleau 100. Les flasques 112 et 114 peuvent être considérés comme clipsés ensemble par leurs projections 116 et 118 à l'intérieur des rouleaux 100. Les projections 116 et 118 forment ensemble des arbres définissant des axes de rotation X₁₁₀ pour les rouleaux 100. Les axes X₁₁₀ correspondent aux axes longitudinaux des projections 116 et 118, ces axes étant confondus en configuration assemblée des cages 110 et parallèles à l'axe X₁₀ en configuration montée du moyeu roue-libre 2.

Comme il ressort plus particulièrement de la figure 11, les rouleaux 100 sont montés autour des projections 118 avec un jeu radial J₁₀₀, ce qui permet leur déformation par écrasement radial en cas de besoin.

La figure 10 montre que les cages 110 sont souples, en ce sens qu'elles peuvent être pliées en rabattant l'une vers l'autre leurs extrémités, comme représenté par les flèches F₁ sur cette figure. Ceci facilite la mise en place des rouleaux 100 dans la gorge 41. En effet, il est possible d'engager successivement deux cages 110 équipées chacune de cinq rouleaux 100 dans la gorge 41, puis de faire venir en appui l'une contre l'autre ces deux cages, comme représenté pour les deux cages visibles sur la gauche de la figure 10. On peut alors rabattre l'une vers l'autre les extrémités d'une troisième cage 110, comme représenté par les flèches F₁, puis engager cette cage dans la gorge 41 avant de relâcher ses extrémités qui viennent alors se loger en regard des extrémités libres de l'ensemble formé des deux cages déjà en place dans la gorge 41. Ce faisant, on positionne les trois cages 110 à l'intérieur de la gorge 41, d'une façon telle qu'elles coopèrent les une avec les autres pour se maintenir en position à l'intérieur de la gorge 41.

Les trois cages 110 forment donc ensemble une cage C multipartite et élastiquement déformable de maintien de la série de quinze rouleaux 100 dans la gorge 41.

Avantageusement, le matériau utilisé pour la cage C, c'est-à-dire l'ensemble des flasques 112 et 114, est un matériau thermoplastique, par exemple du polyacétal.

Le nombre de cages 110 utilisées n'est pas forcément de trois. On peut envisager une variante avec une unique cage qui est déformée radialement de façon centripète afin d'être mise en place dans la gorge 41.

Même si l'usage des cages 110 est particulièrement avantageux, il n'est pas obligatoire. En effet, on peut concevoir un moyeu roue-libre 2 dans lequel les rouleaux 100 sont disposés individuellement dans la gorge 41, sans utilisation de cage. Dans ce cas, ces rouleaux sont lubrifiés et la viscosité de l'huile utilisée permet de les maintenir en position dans la gorge 41, y compris lorsque le corps 40 est séparé du corps 20.

Deux configurations de fonctionnement peuvent être considérées lorsque les rouleaux 100 sont en place dans la gorge 41.

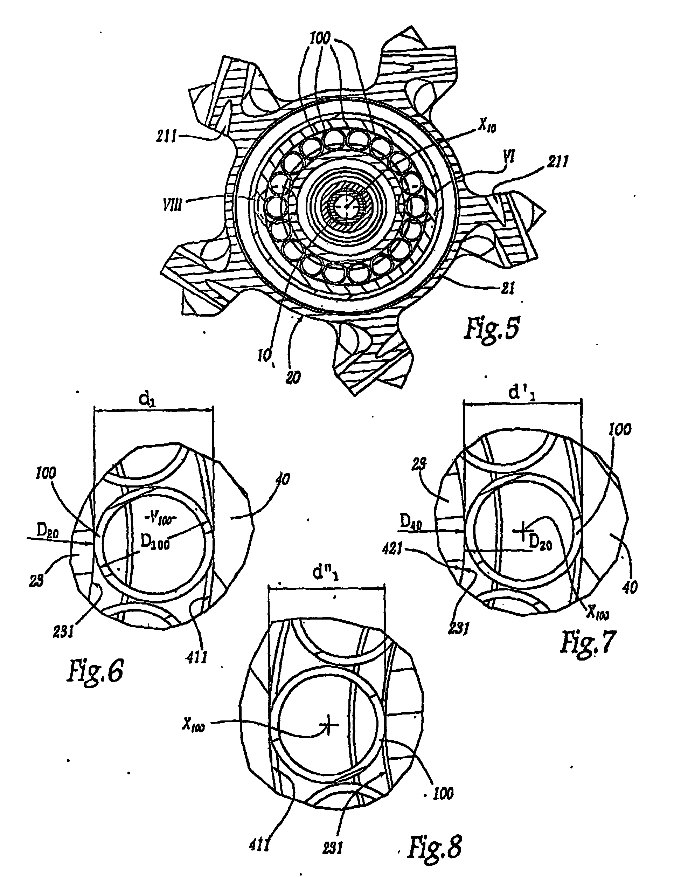

Dans une première configuration correspondant au fonctionnement en mode roue-libre du moyeu 2, le corps de moyeu 20 doit pouvoir tourner autour de l'arbre 10 et de l'axe X₁₀, alors que le corps de roue-libre 40 reste fixe autour de l'arbre 10 et de l'axe X₁₀. Dans ce cas, comme représenté à la figure 6, les rouleaux 100 forment ensemble un palier de support du corps de roue-libre 40 autour de l'embout 23 du corps de moyeu. En effet, ces rouleaux 100 sont capables de rouler contre le fond 411 de la gorge 41 et contre la surface radiale externe 231 de l'embout 23, de telle sorte qu'ils maintiennent la surface radiale interne 421 du support 42 radialement à distance non nulle de la surface 231. Dans ce cas, la distance entre le fond 411 et la surface 231 est équi-répartie autour de l'axe X₁₀. Dans ce mode de réalisation, le Jeu au diamètre existant entre la surface radiale interne 421 et la surface 231 est compris entre 0,1 mm et 0,15 mm.

Dans cette première configuration, les rouleaux 100 sont disposés dans la gorge 100 en étant légèrement comprimés puisque la distance radiale d₁ entre le fond 411 et la surface 231 est légèrement inférieure au diamètre externe nominal D₁₀₀ des rouleaux 100. Par exemple, la distance d₁ est égale à 4,8 mm. Sur la figure 6, le diamètre D₁₀₀ est représenté, alors que le rouleau 100 est légèrement ovalisé.

Lorsque le moyeu roue-libre 2 est en configuration de pédalage, c'est-à-dire lorsqu'un effort de traction est exercé en partie haute de la cassette de pignons 60, le corps de roue-libre 40 tend à tourner dans le sens des flèches F₃ aux figures 4 et 5, ce qui a pour effet d'amener en prise les cliquets 50 avec la denture 32 de la bague 30, solidarisant ainsi en rotation les corps 20 et 40. Dans cette configuration, compte tenu de l'effort exercé par la chaîne sur la cassette 60 et de l'action des cliquets, le corps de roue-libre 40 tend à se déplacer radialement dans le sens de la tension de la chaîne par rapport au corps de moyeu 20 et à son embout 23, perpendiculairement à l'axe X₁₀.

Ceci induit que la distance radiale entre le fond 411 et la surface 231 n'est pas uniforme autour de l'axe X₁₀.

Plus précisément, on atteint la configuration des figures 7 et 8 où la distance entre le fond 411 et la surface 231 en arrière de l'axe X₁₀ a une valeur d'₁ de l'ordre de 4,73 mm, inférieure à la valeur qu'elle a dans la configuration de la figure 6, alors que sa valeur d"₁ en partie avant du moyeu roue-libre, telle que représentée à la figure 8, est de l'ordre de 4,9 mm. Ce fonctionnement est possible grâce au caractère élastiquement déformable des rouleaux 100 qui accommodent les variations de distance entre le fond 411 et la surface 231, tout en reprenant une configuration où ils remplissent une fonction de roulement lorsque l'effort de pédalage est supprimé, de sorte que le corps de roue-libre n'est plus soumis à un effort horizontal qui le plaque contre l'embout 23.

Compte tenu de la diminution de la distance précitée dans la zone correspondant au détail de la figure 7, la surface radiale interne 421 du support 42 vient en appui contre la surface radiale externe 231 de l'embout 23, ce qui facilite la transmission d'effort entre le corps de roue-libre 40 et le corps de moyeu 20.

Ainsi, l'écrasement localisé et réversible des rouleaux 100 se trouvant au-dessus de l'axe X₁₀ permet un appui ferme du corps de roue-libre 40 sur le corps de moyeu 20, à l'interface entre les surfaces 421 et 231, lorsque le moyeu roue-libre est en configuration de pédalage. Ceci permet une transmission de couple entre le corps de roue-libre 40, qui est menant, et le corps de moyeu 20, qui est mené.

On note D₄₀ le diamètre de la surface 421, D₂₀ le diamètre de la surface 231 et P₄₁ la profondeur radiale de la gorge 41 par rapport à la surface 421 qu'elle borde. Le diamètre D₄₀ est légèrement supérieur au diamètre D₂₀. Les valeurs respectives des diamètres D₂₀ et D₄₀ et de la profondeur P₄₁ sont choisies pour que les rouleaux 100 soit toujours légèrement comprimés radialement, y compris dans la configuration de la figure 8, ce qui garantit leur appui simultané sur le fond 411 de la gorge 41 et sur la surface 231 dans toutes les configurations d'utilisation du moyeu 2 et quelle que soit la position angulaire d'un rouleau 100 autour de l'axe X₁₀. Le fait que les rouleaux 100 sont en permanence légèrement comprimés permet de rattraper les tolérances de fabrication.

Il n'est toutefois pas obligatoire que les rouleaux 100 soient précontraints en permanence et on peut envisager un mode de réalisation où ces rouleaux ne sont pas précontraints dans la configuration de la figure 8.

Dans l'exemple représenté, en considérant que les tolérances de fabrication des corps 20 et 40, d'une part, et des rouleaux 100, d'autre part sont de l'ordre de 3 centièmes, l'ovalisation des rouleaux 100 dans la configuration de la figure 6 est minime, de sorte que le palier formé par l'ensemble de ces rouleaux remplit sa fonction de palier sous une charge généralement inférieure à 4 daN telle qu'on en rencontre classiquement dans les moyeux en configuration de roue-libre sous l'action de la seule tension des deux brins de chaine générée parle tendeur de chaîne du dérailleur arrière non représenté. Par conséquent, il est important pour le bon fonctionnement du système que sous une charge de 4 daN, la diminution du diamètre des rouleaux n'atteigne pas la valeur du Jeu au rayon existant entre les surfaces 421 et 231, c'est-à-dire ici une valeur comprise entre 0,05 mm et 0,075 mm. Sous une charge supérieure à 40 daN, que l'on rencontre dans les moyeux en configuration de pédalage, certains des rouleaux 100 sont écrasés et le palier n'est plus tournant, puisque les surfaces 421 et 231 viennent en contact mutuel, alors que la roue libre est alors en prise par l'intermédiaire des cliquets, comme expliqué ci-dessus.

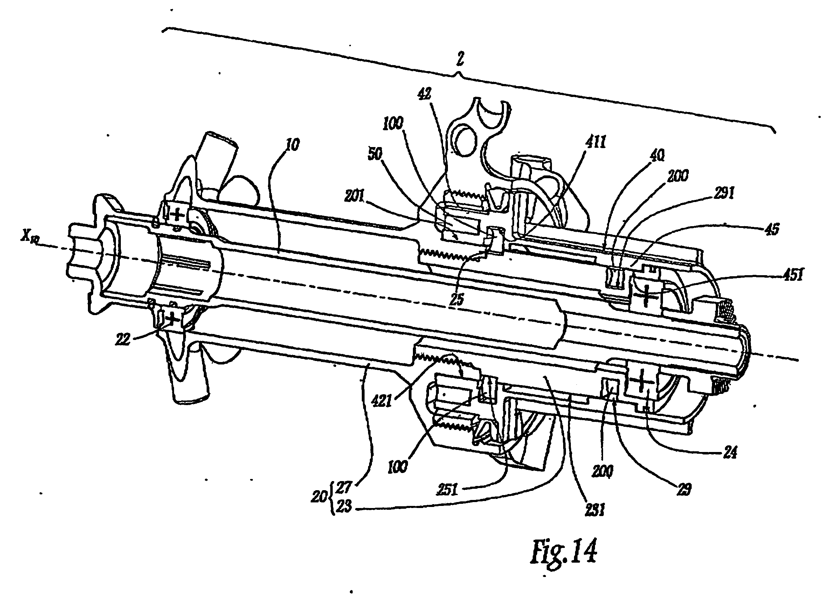

Dans le second mode de réalisation de l'invention représenté à la figure 14 les éléments analogues à ceux du premier mode de réalisation portent les mêmes références.

Le moyeu roue-libre 2 de la figure 14 comprend un corps de moyeu 20 associé à un corps de roue-libre 40, avec interposition d'une première série de rouleaux élastiquement déformables 100 en PEEK reçus dans une gorge 41 du corps de roue-libre 20, comme dans le premier mode de réalisation. Dans ce mode de réalisation, il n'est pas prévu de cage pour maintenir en position les rouleaux 100, ceux-ci étant lubrifiés au moyen d'une huile dont la viscosité assure leur retenue dans la gorge 41.

Un support 42 formé par le corps de roue-libre 40 porte des cliquets 50 de solidarisation unidirectionnelle sélective en rotation entre les corps 20 et 40, en configuration de pédalage. Comme dans le premier mode de réalisation, on note 421 la surface radiale interne du support 42.

En regard de la gorge 41, la surface radiale externe 201 du corps de moyeu 20 est pourvue d'une gorge 25 dans laquelle sont partiellement insérés les rouleaux 100, ce qui concourt au guidage axial de ces rouleaux . Pour permettre la mise en place des rouleaux 100 dans la gorge 25 le corps 20, est bi-partite et comprend un corps principal 27 sur lequel est rapporté par vissage un embout 23 qui vient en appui sur un roulement à billes 24 permettant la rotation du corps de moyeu 20 par rapport à un arbre central 10 du moyeu roue-libre 2 qui définit l'axe de rotation X₁₀ du moyeu. La gorge 25 est ménagée à l'extrémité du corps 27 et délimitée latéralement par l'embout 23 vissé sur ce corps.

Un autre roulement à billes 22 supporte le corps de moyeu 20 par rapport à l'arbre 10, au voisinage de l'extrémité axiale de ce corps opposée au roulement 24.

Le corps de roue libre 40 est positionné axialement le long de l'axe X₁₀ de l'arbre 10. par deux épaulements mais on pourrait aussi le positionner axialement directement par une rangée de rouleaux ou encore par les deux rangées de rouleaux, ces derniers ayant avec le corps 40 des contacts en opposition bilatéralement.

Le corps 40 est pourvu d'une nervure interne 45 dont la surface radiale Interne 451 entoure la surface radiale externe 231 de l'embout 23, axialement sensiblement au même niveau que le palier 24.

Une deuxième série de rouleaux élastiquement déformables 200 en PEEK est disposée dans une gorge 29 ménagée dans l'embout 23, à partir de sa surface radiale externe 231. La nervure 45 se prolonge axialement jusqu'au niveau des rouleux 200. Les rouleaux 200 sont dimensionnés pour être en appui contre la surface radiale interne 451 de la nervure 45. Ils sont enduits d'une huile dont la viscosité permet de les retenir dans la gorge 29.

Les rouleaux 100 et 200 fonctionnent globalement comme les rouleaux 100 du premier mode de réalisation et peuvent prendre une première configuration où ils permettent la rotation entre les corps 20 et 40, en formant, dans le cas où le moyeu est utilisé en roue-libre, deux paliers qui maintiennent écartées radialement les unes des autres les surfaces 201 et 421, d'une part, 451 et 231, d'autre part.

Dans cette première configuration, les rouleaux 100 roulent sur les fonds 411 et 251 des gorges 41 et 25, alors que les rouleaux 200 roulent sur le fond 291 de la gorge 29 et sur la surface 451.

Lorsqu'un effort de pédalage est appliqué sur une cassette de pignons non représentée et solidaire du corps de roue-libre 40, les rouleaux 100 et 200 sont, pour certains d'entre eux situés à l'arrière de l'axe X₁₀, écrasés, ce qui permet un contact entre les corps 20 et 40, respectivement à l'interface entre les surfaces 201 et 421, d'une part, 451 et 231, d'autre part.

Dans ce mode de réalisation, on obtient une double solidarisation des corps 20 et 40 en configuration de pédalage, c'est-à-dire dans la configuration où les rouleaux 100 et 200 sont en partie écrasés par déformation élastique. En effet, un contact a lieu entre les corps 20 et 40 au voisinage des deux extrémités de l'embout 23, à savoir entre les surfaces 201 et 421, d'une part, et entre les surfaces 231 et 451, d'autre part

A la place d'une huile, on peut utiliser la viscosité d'un autre fluide, liquide ou gel, pour retenir les rouleaux 100 et 200 dans les gorges 41 et 29 ou intégrer des cages comme mentionné en référence au premier mode de réalisation.

Pour le reste, ce mode de réalisation fonctionne comme le premier et les rouleaux 100 et 200 sont élastiquement déformables dans les conditions normales d'utilisation du moyeu 2.

Selon un mode de réalisation non représenté de l'invention, le positionnement des rouleaux 100 et 200 peut être inversé. Les rouleaux les plus proches des cliquets 50 peuvent être logés principalement dans une gorge ménagée dans le corps de moyeu 20, alors que les rouleaux les plus proches de l'extrémité 16 de l'arbre 2 sont logés dans une gorge du corps de roue-libre 40. Selon une variante également non représentée, les rouleaux élastiquement déformables peuvent être disposés dans des gorges prévues toutes deux sur le corps de moyeu 20 ou toutes deux sur le corps de roue-libre 40. Selon une autre variante non représentée, une seule série de rouleaux élastiquement déformables peut être prévue, comme dans le premier mode de réalisation, cette série étant reçue dans une gorge ménagée sur le corps de moyeu 20.

Quel que soit le mode de réalisation, compte tenu de la déformation élastique des rouleaux 100 et éventuellement 200, les corps 20 et 40 peuvent être en aluminium, ce qui confère une grande légèreté au moyeu 2, ainsi qu'un prix de revient attractif, à la différence d'un moyeu où certaines parties de ces corps devraient être réalisées en acier à haute résistance, comme ce serait le cas si des roulements à aiguilles étaient utilisés.

Dans tous les modes de réalisation les rouleaux 100 et éventuellement 200 peuvent être fabriqués dans différents matériaux synthétiques autres que le PEEK, notamment en polyacétal ou en polyuréthane. Ils peuvent également être réalisés en métal, notamment en aluminium qui, selon l'épaisseur radiale sélectionnée pour ces rouleaux, présente également une capacité à se déformer élastiquement dans les conditions d'utilisation envisagées. Les rouleaux peuvent également être réalisés en magnésium ou en alliage à base d'aluminium ou de magnésium.

Selon le matériau utilisé, les rouleaux 100 et éventuellement 200 peuvent également être pleins, notamment dans le cas de rouleaux en polyuréthane. Dans ce cas, la ou les cages sont adaptées, voire supprimées, comme mentionné ci-dessus en référence aux modes de réalisation ou c'est la viscosité de l'huile qui retient les rouleaux dans la gorge.

Quel que soit le mode de réalisation, le PEEK est particulièrement adapté pour la réalisation des rouleaux 100 et éventuellement 200 dans la mesure où, jusqu'à 140°C, il ne présente pas de relaxation, alors que son module d'élasticité est de l'ordre de 4500 MPa et que sa limite élastique est de l'ordre de 200 Mpa. Le polyacétale présente également des propriétés satisfaisantes, avec un modèle d'élasticité d'environ 2700 MPa et une limite élastique d'environ 40 Mpa. Toutefois, des déformations permanentes peuvent être obtenues à des températures supérieures à 60°. D'autres matériaux peuvent toutefois être utilisés pour réaliser les rouleaux 100, comme mentionné ci-dessus.

L'utilisation de PEEK ou d'une autre matière synthétique est particulièrement avantageuse en termes de poids. En effet, la densité du PEEK ou des autres matières synthétiques est faible. Par exemple, quinze rouleaux creux 100 de diamètre nominal D₁₀₀ égal à 4,9 mm ont un poids total de 0,25 gramme, les cages 110 ayant un poids du même ordre de grandeur, ce qui est largement inférieur au poids d'un roulement en acier de même taille qui est de l'ordre de 20 grammes.

Les caractéristiques techniques des différents modes de réalisation peuvent être combinées entre elles. Ainsi, les pistes de roulement des rouleaux déformables peuvent être, au choix, définies sur la surface 231 ou 451 d'une partie d'un des corps 20 ou 40 ou au fond d'une gorge telle que la gorge 25. On peut, au choix, utiliser ou non des cages de maintien des rouleaux 100 et 200 dans tous les modes de réalisation.

Les roulements à billes 22, 24 et 48 peuvent être remplacés par d'autres roulements à corps roulants non déformables, par exemple des roulements à rouleaux ou à aiguilles.

## Revendications

1. Moyeu roue-libre (2) comprenant :
- un arbre central (10) définissant un axe de rotation (X₁₀)
- un corps de moyeu (20) monté libre en rotation autour de l'arbre
- un corps de roue-libre (40) monté autour d'une partie (23) du corps de moyeu, avec possibilité de rotation unidirectionnelle
- au moins un organe formant palier entre le corps de roue-libre (40) et une partie (23 ; 27, 23) du corps de moyeu (20) autour de laquelle est monté le corps de roue-libre,
**caractérisé en ce que** des organes formant palier comprennent au moins une série de rouleaux (100 ; 100, 200) disposés dans une gorge (41 ; 41, 29) d'un premier élément (40 ; 40, 20), parmi le corps de roue-libre (40) et le corps de moyeu (20), cette gorge étant ménagée au voisinage d'une première surface (421 ; 421, 231) du premier élément disposée en regard d'une deuxième surface (231 ; 201, 451) du deuxième élément (20 ; 20, 40), parmi le corps de roue-libre et le corps de moyeu, et **en ce que** les rouleaux (100, 200) sont élastiquement déformables, dans les conditions normales d'utilisation du moyeu roue-libre (2), entre une première configuration, où Ils maintiennent les première et deuxième surfaces (421, 231 ; 421, 201, 231, 451) radialement écartées l'une de l'autre et où ils roulent sur le fond (411 ; 411, 291) de la gorge et sur une portion (23 ; 27, 40) du deuxième élément, et une deuxième configuration où ils permettent un appui des première et deuxième surfaces (421, 231 ; 421, 201, 231, 451) l'une contre l'autre.

2. Moyeu roue-libre selon la revendication 1, **caractérisé en ce que** les rouleaux (100) sont maintenus en position dans la gorge (41) par au moins une cage (C, 110) élastiquement déformable.

3. Moyeu roue-libre selon la revendication 2, **caractérisé en ce que** la cage (C) est multipartite et apte à être insérée, par parties (110) équipée de rouleaux (100), dans la gorge (41) et **en ce que** les parties (110) de la cage se calent les unes les autres en place dans la gorge.

4. Moyeu roue-libre selon l'une des revendications précédentes, **caractérisé en ce que** les rouleaux (100) sont creux.

5. Moyeu roue-libre selon l'une des revendications 2 ou 3 et la revendication 4, **caractérisé en ce que** la cage (C) ou chaque partie (110) de la cage comprend deux flasques (112, 114) pourvus chacun d'organes en saillies (116, 118) aptes à coopérer chacun avec un organe en saillie (118, 116) de l'autre flasque pour être engagés dans un volume central (V₁₀₀) d'un rouleau (100) et former ensemble un arbre définissant un axe de rotation (X₁₁₀) pour ce rouleau.

6. Moyeu roue-libre selon l'une des revendications précédentes, **caractérisé en ce qu'**il comprend une unique série de rouleaux déformables (100) formant palier et disposés entre le corps de roue-libre (40) et une partie (23) du corps de moyeu (20) et **en ce que** des paliers (22, 24, 48) à corps roulants non déformables sont disposés respectivement entre le corps de roue-libre (40) et l'arbre (10) et entre la partie (23) du corps de moyeu (20) et l'arbre (10).

7. Moyeu roue-libre selon l'une des revendications 1 à 5, **caractérisé en ce qu'**il comprend deux séries de rouleaux déformables (100, 200) formant paliers et disposés entre le corps de roue-libre (40) et la partie (27, 23) du corps de moyeu.

8. Moyeu roue-libre selon la revendication 7, **caractérisé en ce qu'**une première série de rouleaux déformables (100) est disposée dans une première gorge (41) ménagée dans le corps de roue-libre (40) et destinée à rouler sur une surface (251) du corps de moyeu (27, 23) et **en ce qu'**une deuxième série de rouleaux déformables (200) est disposée dans une deuxième gorge (29) ménagée dans le corps de moyeu (20) et destinée à rouler sur une surface (451) du corps de roue-libre.

9. Moyeu roue-libre selon l'une des revendications précédentes, **caractérisé en ce que** les rouleaux (100, 200) sont en matériau synthétique, notamment en PEEK, en polyacétal ou en polyuréthane.

10. Moyeu roue-libre selon l'une des revendications 1 à 9, **caractérisé en ce que** les rouleaux (100, 200) sont en métal, notamment en aluminium ou en magnésium ou en alliage à base d'aluminium ou de magnésium.

11. Roue de cycle, **caractérisée en ce qu'**elle est équipée d'un moyeu roue-libre (2) selon l'une des revendications précédentes.

## Claims

1. Freewheel hub (2) comprising:
- a central shaft (10) defining an axis of rotation (X₁₀)
- a hub body (20) mounted with the freedom to rotate about the shaft,
- a freewheel body (40) mounted around a part (23) of the hub body, with the ability to rotate in just one direction
- at least one member forming a bearing between the freewheel body (40) and a part (23 ; 27, 23) of hub body (20) about which part the freewheel body is mounted, **characterized in that** bearing-forming members comprise at least one series of rollers (100; 100, 200) arranged in a groove (41; 41, 29) of a first element (40; 40, 20) out of the freewheel body (40) and the hub body (20), this groove being formed near a first surface (421; 421, 231) of the first element positioned facing a second surface (231; 201, 451) of the second element (20; 20, 40) out of the freewheel body and the hub body and **in that** the rollers (100, 200) are elastically deformable, under the normal conditions of use of the freewheel hub (2), between a first configuration in which they keep the first and second surfaces (421, 231; 421, 201, 231, 451) radially separated from one another and roll along the bottom (411; 411, 291) of the groove and along a portion (23; 27, 40) of the second element, and a second configuration in which they allow the first and second surfaces (421, 231; 421, 201, 231, 451) to bear against one another.

2. Freewheel hub according to Claim 1, **characterized in that** the rollers (100) are held in position in the groove (41) by at least one elastically deformable cage (C, 110).

3. Freewheel hub according to Claim 2, **characterized in that** the cage (C) is a multi-part cage that can be inserted, in parts (110) fitted with rollers (100), into the groove (41), and **in that** the parts (110) of the cage wedge one another in place in the groove.

4. Freewheel hub according to one of the preceding claims, **characterized in that** the rollers (100) are hollow.

5. Freewheel hub according to either of Claims 2 and 3 together with Claim 4, **characterized in that** the cage (C) or each part (110) of the cage comprises two cheeks (112, 114) each provided with projecting members (116, 118) each able to collaborate with a projecting member (118, 116) of the other cheek in order to be engaged in a central volume (V₁₀₀) of a roller (100) and together form a shaft defining an axis of rotation (X₁₀₀) for this roller.

6. Freewheel hub according to one of the preceding claims, **characterized in that** it comprises a single series of deformable rollers (100) forming a bearing and positioned between the freewheel body (40) and a part (23) of the hub body (20), and **in that** bearings (22, 24, 48) with non-deformable rolling bodies are positioned respectively between the freewheel body (40) and the shaft (10), and between the part (23) of the hub body (20) and the shaft (10).

7. Freewheel hub according to one of Claims 1 to 5, **characterized in that** it comprises two series of deformable rollers (100, 200) forming bearings and arranged between the freewheel body (40) and the part (27, 23) of the hub body.

8. Freewheel hub according to Claim 7, **characterized in that** a first series of deformable rollers (100) is positioned in a first groove (41) formed in the freewheel body (40) and intended to roll along a surface (251) of the hub body (27, 23), and **in that** a second series of deformable rollers (200) is positioned in a second groove (29) formed in the hub body (20) and intended to roll along a surface (451) of the freewheel body.

9. Freewheel hub according to one of the preceding claims, **characterized in that** the rollers (100, 200) are made of a synthetic material, notably of PEEK, of polyacetal or of polyurethane.

10. Freewheel hub according to one of Claims 1 to 9, **characterized in that** the rollers (100, 200) are made of metal, notably of aluminium or of magnesium or of an aluminium-based or magnesium-based alloy.

11. Bicycle wheel, **characterized in that** it is equipped with a freewheel hub (2) according to one of the preceding claims.

## Patentansprüche

1. Freilaufnabe (2), die Folgendes enthält:
- eine zentrale Welle (10), die eine Drehachse (X₁₀) definiert,
- einen Nabenkörper (20), der frei drehend um die Welle montiert ist,
- einen Freilaufkörper (40), der um einen Teil (23) des Nabenkörpers montiert ist, mit der Möglichkeit einer unidirektionalen Drehung,
- mindestens ein ein Lager bildendes Organ zwischen dem Freilaufkörper (40) und einem Teil (23; 27, 23) des Nabenkörpers (20), um den der Freilaufkörper montiert ist,
**dadurch gekennzeichnet, dass** Lager bildende Organe mindestens eine Reihe von Walzen (100; 100, 200) enthalten, die in einer Rille (41; 41, 29) eines ersten Elements (40; 40, 20) zwischen dem Freilaufkörper (40) und dem Nabenkörper (20) angeordnet sind, wobei diese Rille in der Nähe einer ersten Fläche (421; 421, 231) des ersten Elements ausgebildet ist, die sich gegenüber einer zweiten Fläche (231; 201, 451) des zweiten Elements (20; 20, 40) zwischen dem Freilaufkörper und dem Nabenkörper befindet, und dass die Walzen (100, 200) unter den normalen Nutzungsbedingungen der Freilaufnabe (2) zwischen einer ersten Konfiguration, in der sie die erste und die zweite Fläche (421, 231; 421, 201, 231, 451) radial zueinander in Abstand halten, und in der sie auf dem Boden (411; 411, 291) der Rille und über einen Abschnitt (23; 27, 40) des zweiten Elements rollen, und einer zweiten Konfiguration, in der sie eine Auflage der ersten und zweiten Fläche (421, 231; 421, 201, 231, 451) gegeneinander erlauben, elastisch verformbar sind.

2. Freilaufnabe nach Anspruch 1, **dadurch gekennzeichnet, dass** die Walzen (100) durch mindestens einen elastisch verformbaren Käfig (C, 110) in der Rille (41) in Stellung gehalten werden.

3. Freilaufnabe nach Anspruch 2, **dadurch gekennzeichnet, dass** der Käfig (C) vielteilig ist und in mit Walzen (100) ausgestatteten Teilen (110) in die Rille (41) eingefügt werden kann, und dass die Teile (110) des Käfigs sich in der Rille angeordnet ineinander verkeilen.

4. Freilaufnabe nach einem der vorhergehenden Ansprüche, **dadurch gekennzeichnet, dass** die Walzen (100) hohl sind.

5. Freilaufnabe nach einem der Ansprüche 2 oder 3 und Anspruch 4, **dadurch gekennzeichnet, dass** der Käfig (C) oder jeder Teil (110) des Käfigs zwei Flansche (112, 114) enthält, die je mit vorstehenden Organen (116, 118) versehen sind, die je mit einem vorstehenden Organ (118, 116) des anderen Flanschs zusammenwirken können, um in ein zentrales Volumen (V₁₀₀) einer Walze (100) eingeführt zu werden und zusammen eine Welle zu formen, die eine Drehachse (X₁₁₀) für diese Walze definiert.

6. Freilaufnabe nach einem der vorhergehenden Ansprüche, **dadurch gekennzeichnet, dass** sie eine einzige Reihe von verformbaren Walzen (100) enthält, die ein Lager formen und zwischen dem Freilaufkörper (40) und einem Teil (23) des Nabenkörpers (20) angeordnet sind, und dass Lager (22, 24, 48) mit nicht verformbaren Wälzkörpern zwischen dem Freilaufkörper (40) und der Welle (10) bzw. zwischen dem Teil (23) des Nabenkörpers (20) und der Welle (10) angeordnet sind.

7. Freilaufnabe nach einem der Ansprüche 1 bis 5, **dadurch gekennzeichnet, dass** sie zwei Reihen von verformbaren Walzen (100, 200) enthält, die Lager formen und zwischen dem Freilaufkörper (40} und dem Teil (27, 23) des Nabenkörpers angeordnet sind.

8. Freilaufnabe nach Anspruch 7, **dadurch gekennzeichnet, dass** eine erste Reihe von verformbaren Walzen (100) in einer ersten Rille (41) angeordnet ist, die im Freilaufkörper (40) ausgebildet ist, und dazu bestimmt ist, auf einer Fläche (251) des Nabenkörpers (27, 23) zu rollen, und eine zweite Reihe von verformbaren Walzen (200) in einer zweiten Rille (29) angeordnet ist, die im Nabenkörper (20) ausgebildet ist, und dazu bestimmt ist, auf einer Fläche (451) des Freilaufkörpers zu rollen.

9. Freilaufnabe nach einem der vorhergehenden Ansprüche, **dadurch gekennzeichnet, dass** die Walzen (100, 200) aus Kunststoff sind, insbesondere aus PEEK, aus Polyacetal oder aus Polyurethan.

10. Freilaufnabe nach einem der Ansprüche 1 bis 9, **dadurch gekennzeichnet, dass** die Walzen (100, 200) aus Metall sind, insbesondere aus Aluminium oder aus Magnesium, oder aus einer Legierung auf der Basis von Aluminium oder von Magnesium.

11. Fahrradrad, **dadurch gekennzeichnet, dass** es mit einer Freilaufnabe (2) nach einem der vorhergehenden Ansprüche ausgestattet ist.
